# EUROPEAN PATENT SPECIFICATION

(11) **EP 1 080 130 B1**
(45) Date of publication and mention of the grant of the patent: **13.10.2004**
(21) Application number: 99925891.6
(22) Date of filing: 26.05.1999
(51) Int. Cl.: C08G 69/28

(54) **CONTINUOUS POLYAMIDATION PROCESS**
KONTINUIERLICHES VERFAHREN ZUR POLYAMIDHERSTELLUNG
PROCEDE DE POLYAMIDATION EN CONTINU

(30) Priority: 29.05.1998 US 87316 P
(43) Date of publication of application: 07.03.2001
(73) Proprietor: Solutia Inc., St. Louis, Missouri 63141 (US)
(72) Inventor: BUSH, Gregory, E., Pensacola, FL 32503 (US); SCHWIER, Chris, E., Pensacola Beach, FL 32561 (US); LEMBCKE, Robert, M., Pensacola, FL 32504 (US); COOK, Steven, W., Longmeadow, Massachusetts 01106 (US)
(74) Representative: Albrecht, Thomas, Dr.
(86) International application number: PCT/US1999/011661
(87) International publication number: WO 1999/061511

(56) References cited:
- GB-A- 976 161
- US-A- 2 840 547
- US-A- 5 674 974

## Description

The present invention relates generally to processes for producing polyamides from dicarboxylic acid monomers and diamine monomers. More particularly, the invention relates to a process for producing polyamides that does not require the addition of water to the reactants.

Polyamides can be produced by a two-step process in which a dicarboxylic acid and a diamine are reacted in water to form a salt, and then the salt is heated to cause polymerization. For example, adipic acid and hexamethylenediamine can be used to form nylon 6,6. The water liberated by the polymerization as well as the water added with the reactants must eventually be removed from the product, for example by evaporation. This requires major amount of energy as well as additional process equipment. Therefore, it would be useful to produce polyamides without adding water to the reactants, in order to reduce the expense of removing water from the product, and in order to eliminate the intermediate (salt) product. thereby simplifying the overall process.

However, attempts to produce polyamides directly from the monomers without adding water have encountered a number of problems. Regulating the amounts of the monomers fed to the reaction is critical, because an excess of one or the other will adversely affect the molecular weight and thus the physical properties of the product. It has proven to be quite difficult to provide the precise regulation of reactant amounts that is required. Other problems with such direct polymerization processes include degradation of the monomers and/or the polymer product as a result of (1) being kept at high temperatures for lengthy periods of time (e.g., several hours), (2) contact of the molten monomers with oxygen. and (3) exposure to trace metal impurities in the materials from which the process equipment is made.

There is a long-standing need for improved processes for making polyamides directly from monomers.

### SUMMARY OF THE INVENTION

One aspect of the invention is a process for producing a polyamide from dicarboxylic acid monomer and diamine monomer. One embodiment of the process includes the steps of:
(a) mixing molten dicarboxylic acid monomer and molten diamine monomer in equimolar amounts, thereby producing a molten reaction mixture;
(b) flowing the reaction mixture through at least one unvented reaction vessel, the residence time of the reaction mixture in the at least one unvented reaction vessel being between about 0.01 minutes and about 30 minutes, thereby forming a first product stream that comprises polyamide and water of polymerization; and
(c) flowing the first product stream through at least one vented vessel, whereby water of polymerization is removed, thereby forming a second product stream that comprises polyamide.

In another embodiment, the process includes the steps of:
(a) mixing molten dicarboxylic acid monomer and molten diamine monomer in equimolar amounts, thereby producing a molten reaction mixture; and
(b) flowing the reaction mixture through at least one unvented reaction vessel at a pressure between 0-3.45 MPa (0-500 psig), the residence time of the reaction mixture in the at least one unvented reaction vessel being between 0.01 minutes and 30 minutes. thereby forming a first product stream that comprises polyamide.

In this embodiment of the process, a second vessel, located downstream of the at least one unvented reaction vessel, is not required. but may optionally be used. for removal of water of polymerization, for further reaction, or for both purposes.

This process of the present invention can operate continuously, and there is no need to add water to the dicarboxylic acid, to the diamine, or to the reaction mixture. No additional dicarboxylic acid monomer or diamine monomer needs to be added after the mixing.

The molten dicarboxylic acid can be produced by the steps of:
removing oxygen from dry dicarboxylic acid by alternately subjecting the dry dicarboxylic acid in an oxygen removal pressure vessel to a vacuum and to inert gas pressure, thereby producing solid dicarboxylic acid that has reduced molecular oxygen content; and
feeding the solid dicarboxylic acid having reduced molecular oxygen content to a melter vessel which contains a quantity of molten dicarboxylic acid. whereby the solid dicarboxylic acid melts and a continuous stream of molten dicarboxylic acid is produced.

The solid dicarboxylic acid can be moved from the oxygen removal pressure vessel to the melter vessel by gravity. Preferably it is moved from the oxygen removal pressure vessel to the melter vessel by a combination of gravity and inert gas pressure in the oxygen removal pressure vessel. This arrangement permits the residence time of the dicarboxylic acid monomer in the melter vessel to be less than three hours.

In preferred embodiments of the process. the temperature of the reaction mixture in the at least one unvented reaction vessel is between 220 and 300°C. Preferably the pressure in the at least one unvented reaction vessel is between 0-3.45 MPa 0-500 psig, more preferably between 0.34-1.72 MPa (50-250 psig), most preferably between 0.83-1.24 MPa (120-180 psig). The residence time of the reaction mixture in the at least one unvented reaction vessel is preferably between 0.01 minutes and 30 minutes, more preferably between about 0.5-30 minutes. most preferably between about 1-5 minutes. The first product stream exiting the at least one unvented reaction vessel typically contains less than 40% by weight unpolymerized monomers, preferably less than 10% by weight unpolymerized monomers. The residence time of the reaction mixture in the at least one vented reaction vessel is preferably from 1 minute to 60 minutes.

In one embodiment of the invention, a reactive diamine recovery system can be used. The at least one vented reaction vessel generates an offgas stream that comprises water vapor and vaporized diamine monomer, and the offgas is contacted with molten dicarboxylic acid monomer in a recovery column, whereby at least a portion of the vaporized diamine monomer reacts with the dicarboxylic acid monomer to form polyamide. A liquid effluent stream is generated from the recovery column that comprises polyamide and unreacted molten dicarboxylic acid monomer. and the liquid effluent stream is subsequently mixed with molten diamine monomer.

One specific embodiment of the invention is a continuous process for making nylon 6.6 from adipic acid and hexamethylenediamine (HMD), comprising:
removing oxygen from dry adipic acid by alternately subjecting the dry acid in an oxygen removal pressure vessel to a vacuum and to inert gas pressure, thereby producing solid adipic acid that has reduced molecular oxygen content:
feeding the solid adipic acid having reduced molecular oxygen content to a melter vessel which contains a quantity of molten adipic acid, whereby the solid adipic acid melts and a continuous stream of molten adipic acid is produced;
melting HMD;
mixing molten adipic acid and molten HMD in equimolar amounts, thereby creating a reaction mixture;
flowing the reaction mixture through at least one unvented reaction vessel. the residence time of the reaction mixture in the at least one unvented reaction vessel being between about 0.01 to about 5 minutes, thereby forming a partially polymerized nylon 6.6 reaction mixture;
flowing the partially polymerized reaction mixture through at least one vented reaction vessel, whereby the partially polymerized reaction mixture is further polymerized, producing nylon 6,6, and wherein water of polymerization is removed.

In this specific embodiment, the relative viscosity (RV) of the partially polymerized nylon 6,6 reaction mixture exiting the unvented reaction vessel is between 0 and 3, and the relative viscosity of the nylon 6.6 exiting the vented vessel is between 3 and 15. Relative viscosity as used herein is the ratio of viscosity (in centipoises) at 25°C of 8.4% by weight solution of polyamide in 90% formic acid (90% by weight formic acid and 10% by weight water) to the viscosity (in centipoises) at 25°C of 90% formic acid alone.

The polyamidation process of the present invention can produce its end product without the need to add water to the reactants. and without the intermediate step of forming a salt. In addition, the process of the present invention can operate continuously and with much shorter residence times for the molten reactants and molten polymer in the high temperature portions of the process. This significantly reduces the water usage, waste water production, and energy consumption of the process. This also eliminates the need for or reduces the required size of some process equipment found in prior art processes, such as evaporators that have been used to remove the added process water. Further, excessive thermal exposure of the reactants and product is avoided.

The aspect of the present invention relating to a reactive recovery column for recovery and re-use of hexamethylenediamine or other diamine monomer reduces diamine emissions in waste streams, and increases the overall conversion of diamine feed to polyamide product.

The aspect of the present invention relating to continuous melting of dicarboxylic acid, such as adipic acid, provides a practical and economical method of continuously supplying molten dicarboxylic acid for use in a polyamidation process or for other uses. The process provides high quality molten acid without discoloration or other thermal degradation. The production of clear molten acid facilitates the production of high quality polyamide.

### BRIEF DESCRIPTION OF THE DRAWINGS

Figure 1 is a process flow diagram for a polyamidation process of the present invention.
Figure 2 is a process flow diagram for a reactive diamine recovery system that can be used in a polyamidation process of the present invention.

### DESCRIPTION OF ILLUSTRATIVE EMBODIMENTS

The process of the present invention can be used to produce a variety of polyamides from diacid and diamine monomers. The process is particularly useful for producing nylon 6,6 from adipic acid and hexamethylenediamine.

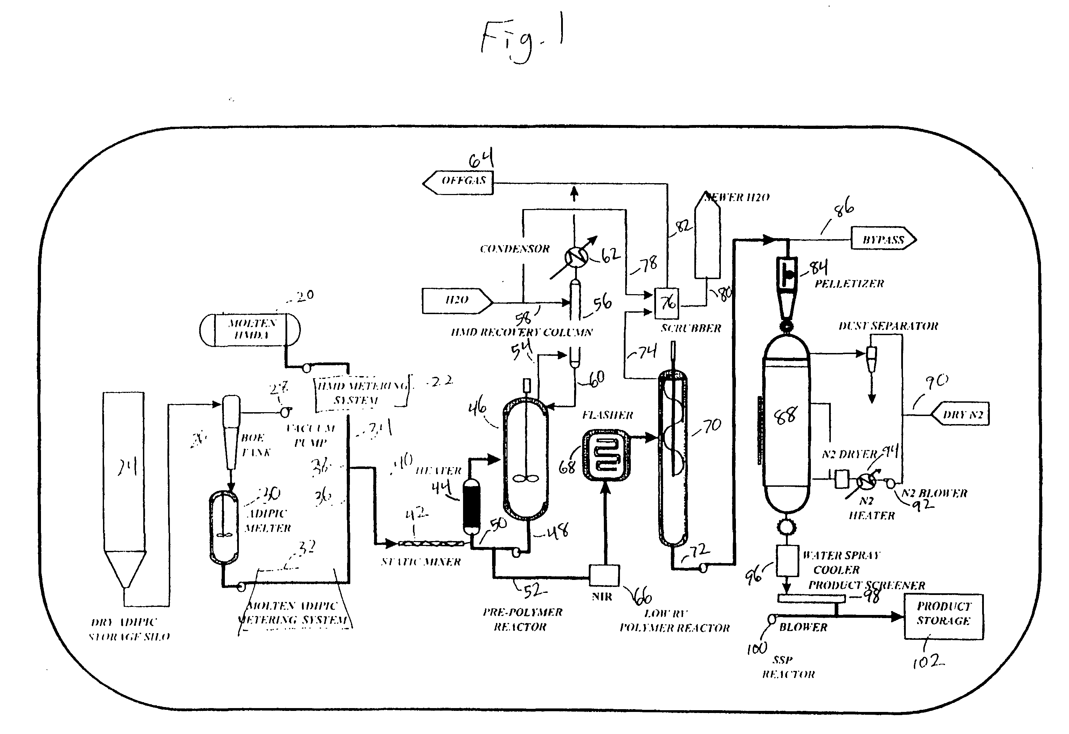

Figure 1 shows a process flow diagram for one embodiment of the process. Molten hexamethylenediamine (HMD) is provided from a molten HMD storage tank 20. There are several suitable ways of providing the molten HMD. One is to locate the polyamidation process equipment adjacent to a plant where HMD is produced. so that a molten HMD stream can be piped directly to the tank 20. Another way would be to provide an aqueous HMD solution, evaporate the water, and melt the HMD.

Heat optionally can be applied in this tank 20, for example by means of a heat transfer jacket around the tank 20. The temperature in this tank is preferably about 70°C. The molten HMD is then pumped through an HMD metering system 22 which precisely controls the amount of HMD fed to the downstream apparatus.

Adipic acid, typically in the form of dry crystals, is supplied from an adipic acid storage silo 24. Adipic acid from the silo flows to a bulk oxygen eliminator tank 26. In this tank 26, air is removed. Preferably, removal of air in the tank 26 is accomplished by cycling vacuum with nitrogen displacement in batch mode. The vacuum can be induced by means of a vacuum pump 28. The frequency of cycling between vacuum and nitrogen pressure can be adjusted to achieve the desired level of oxygen removal.

Preferably the bulk oxygen eliminator tank 26 comprises a pressure vessel having a bottom portion forming a hopper with a diminishing diameter towards its bottom. The sides of the hopper portion of the bulk oxygen eliminator tank preferably form an angle with the horizontal of at least 70° in order to facilitate flow out of the bottom of the tank.

The adipic acid crystals, largely free of molecular oxygen, then flow (preferably by gravity, with a pressure assist by the nitrogen pressure in the bulk oxygen eliminator tank) from the bulk oxygen eliminator tank 26 to an adipic acid melter vessel 30. The melter vessel 30 preferably is a continuously stirred jacketed vessel that operates slightly pressurized with nitrogen at a temperature slightly above the adipic acid melt point (i.e., above 153°C). Adipic acid crystals entering this vessel through its top are quickly melted at the surface of the molten adipic acid therein. Thus the process can continuously melt adipic acid. Preferably the melter vessel 30 has a reversed conical entry nozzle to reduce flow resistance. It is also preferred that the melter vessel 30 be made of a metal alloy containing little or no impurities that would adversely affect the molten monomer. Hastolloy C and 316 stainless steel are suitable materials.

It may be useful to include additional measures for further oxygen removal from this melter vessel. to minimize the potential for thermal degradation. One way of doing this is to supply vibrational energy to the molten adipic acid in the melter vessel 30. for example by means of an ultrasonic device. The vibrational energy can facilitate the escape of entrained air from the molten acid, causing air bubbles to rise to the surface of the molten acid.

The residence time of the molten adipic acid in the melter vessel 30 preferably is minimized to reduce the thermal exposure of that reactant. Preferably the residence time is less than three hours, more preferably between about 1-2 hours. The molten adipic acid exits the bottom of the melter vessel 30 and is pumped to a molten adipic acid metering system 32 which precisely controls the amount of adipic acid fed to the downstream apparatus.

The combination of the bulk oxygen eliminator tank 26 and the adipic acid melter vessel 30 permits the continuous melting of adipic acid crystals without thermal degradation or discoloration.

The molten HMD stream 34 from the HMD metering system 22 and the molten adipic acid stream 36 from the adipic acid metering system 32 are continuously contacted and combined in stoichiometric amounts in a Y-junction 38. The two monomers contact each other as they pass from the Y-junction through the next segment 40 of piping and into an unvented mixer 42. which is preferably an inline static mixer.

In a preferred embodiment of the process, the molten adipic acid stream 36 is at a temperature of about 170°C and the molten HMD stream 34 is at about 70°C, and the pressure at the Y-junction 38 is about 1.03 MPa (150 psig). The inline static mixer is preferably a Kenics static mixer with 24 elements. The walls of the Y-junction and the inline mixer 42 are preferably kept at about 268°C. The residence time of the monomers in the mixer 42 is preferably between about 1-30 seconds, more preferably about 3 seconds. The reaction mass leaving the mixer 42 passes into an unvented pipe, allowing for example an additional 10-60 seconds of reaction time at 260°C and 1.03 MPa (150 psig).

Although the process of the present invention can operate without the inclusion of water in the reactants, it is not required that the reactants be entirely anhydrous. For example, the HMD feed stream could contain as much as about 5% water by weight, and the adipic acid stream could contain as much as about 2% water by weight. and the process should still function properly. Reactant streams having such low concentrations of water are referred to herein as "essentially dry."

Some reaction of the HMD and adipic acid occurs from the time they contact each other at the Y-junction 38 continuing through the time they enter the heat exchanger 44. The temperature and residence time employed in this portion of the process can be selected to cause complete polymerization by this point. or to prevent compete polymerization from occurring by this point. In the latter situation. the partial reaction product generated by the contacting of the monomers is referred to herein as the "prepolymer." The prepolymer mass in the pipe downstream of the mixer 42 will typically be 60-90% converted to nylon 6,6. No plugging should occur because the conditions employed prevent crystallization of low melting intermediates. It is important to optimum operation of the process that the piping 40 and mixer 42 be unvented, and that the pressure therein be relatively low, for example between 0-3.45 MPa (0-500 psig), most preferably about 1.03 MPa (150 psig).

In the embodiment of the process shown in Figure 1, the prepolymer next passes through a heat exchanger 44 and into a vented prepolymer reactor 46. It is not critical that a heat exchanger be used here. Any required heat could instead be provided by internal heating coils within the reactor 46, or by jacket around the reactor. The heated prepolymer exiting the heat exchanger 44 preferably enters the reactor 46 at a point below the surface of the liquid material therein. Further polymerization can occur in this reactor 46, which is preferably a continuously stirred tank reactor. The reactor bottoms stream 48 optionally can be split into a recycle stream 50 and a second stream 52 that is routed for further processing. If recycle is used, the recycle stream 50 flowrate is preferably at least 15 times larger than the flowrate of fresh prepolymer feed to the reactor 46. The reactor 46 is preferably operated about 50% full of liquid material in order to provide a large vapor/liquid disengagement surface.

It is highly desirable in this process to provide backmixing of polymer endgroups, high surface area interface generation which facilitates devolitilization of the molten material, and high heat transfer rates which can rapidly increase the temperature of the melted material. These advantages can be achieved, for example, either by use of a continuously stirred tank reactor, or by use of a plug flow reactor together with recycle of the product stream.

The overhead stream 54 from the reactor 46 is vapor including steam (i.e., vaporized water produced by the polycondensation reaction) and typically some HMD. The overhead 54 passes into an HMD recovery column 56, into which is also fed water 58. Condensate stream 60, containing some HMD and water, is recycled to the reactor 46. while the remaining vapor is cooled by a heat exchanger 62 and removed as part of an offgas stream 64.

In one embodiment of the process. the prepolymer is heated to about 260°C in the heat exchanger 44 and the reactor 46 operates at about 260°C and 1.03 MPa (150 psig). As an example of suitable relative flowrates, if the fresh prepolymer is fed to the reactor 46 at a rate of 45.4 Kg (100 lbs.) per hour, the reactor bottoms recycle flowrate is preferably about 907 Kg (2,000 lbs.) per hour. A reactor 46 operated under these conditions can yield greater than 95% conversion of monomers to nylon 6.6 with a three weight percent water concentration after 20 min. residence time in the reactor 46.

The partially polymerized material in the stream 52 leaving the reactor 46 is analyzed, for example by a near-infrared (NIR) device 66. The device can determine, for example by near-infrared spectroscopy, the relative amount of amine and acid endgroups. The measurements by the NIR device 66 can be used to control the HMD metering system 22 and/or the adipic acid metering system 32.

Although the material at this point in the process is polymerized, in some embodiments of the process the extent of the polymerization, and therefore the molecular weight and relative viscosity (RV) of the polymer, will not be as high as is desired for the final product. Therefore, the partially polymerized material can be passed through a flasher 68 to supply additional heat, and then into a second reactor 70. The purpose of the second reactor 70 is to permit further polymerization and thus to increase the molecular weight and RV of the product. The polymer product in the bottoms stream 72 from the second reactor should have the desired molecular weight for the end product.

Preferably the temperature in the second reactor 70 is between about 260 and about 280 °C, and the pressure is atmospheric.

HMD vapor and steam generated in the second reactor 70 are removed in an overhead stream 74 which enters a scrubber 76. A water stream 78 is also fed to this scrubber, so that the steam will be condensed and can be removed as a sewer water stream 80. Remaining vapor leaves the scrubber 76 in an overhead stream 82 and becomes part of the offgas stream 64.

The polymer product can either be sent through a pelletizer 84 or routed through a bypass line 86. If it is run through the pelletizer, the polymer pellets are then passed into a dryer 88. A nitrogen gas feed 90, a nitrogen blower 92, and a nitrogen heater 94 are used to supply nitrogen gas to the vessel 88, which dries the polymer pellets. The dried pellets passing out the bottom of the dryer 88 pass through a water spray cooler 96, a screener 98, and are moved by a blower 100 to a product storage area 102.

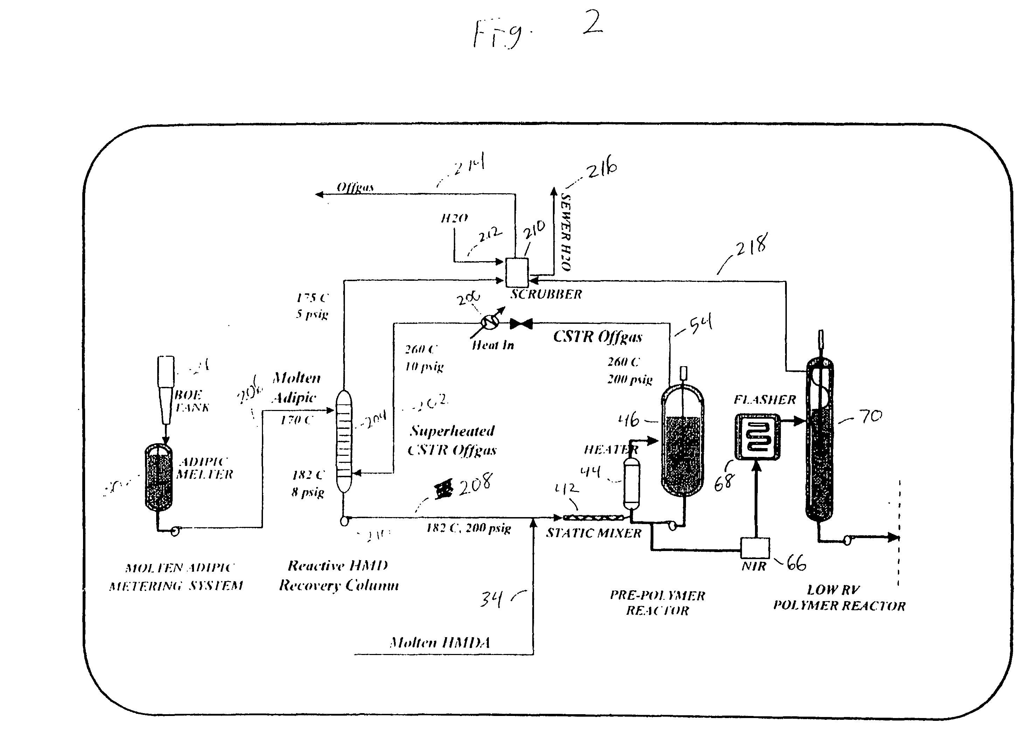

Referring again to Figure 1, the HMD in the offgas 54 from the reactor 46 can be removed by conventional separation in a sieve tray column 56. Alternatively, the HMD can be recovered using a reactive column as shown in Figure 2. In this alternative embodiment, the offgas 54 from the reactor 46 is vented through a heat exchanger 200 in which it is superheated to 260°C and 10 psig. The superheated offgas 202 is injected in the lower region of a reactive HMD recovery column 204. A molten adipic acid stream 206 (preferably at about 170°C) is fed to the upper region of the column 204, which preferably is maintained at about 182°C and about 8 psig. The molten adipic acid reacts with the HMD in the offgas, producing small quantities of nylon salt, while being heated to 182°C. The effluent stream 208 from the column 204 is pumped to the in-line static mixer 42, with the pump 210 preferably increasing the effluent pressure to about 200 psig. Of course molten HMD stream 34 is also fed to the mixer 42.

The offgas from the top of the reactive HMD recovery column 204 is then fed to a scrubber 210, where it is scrubbed by a water stream 212. resulting in a final offgas stream 214 and a sewer water stream 216. The offgas stream 218 from the second reactor 70 can also be fed to the scrubber 210.

The use of a reactive HMD recovery column 204 as shown in Figure 2 can lower total water usage in the process, by eliminating external water reflux to the reactor.

The polyamides produced by the process, such as nylon 6.6, have a number of well-known uses, such as being formed into fibers for carpet.

The preceding description of specific embodiments of the present invention is not intended to be a complete list of every possible embodiment of the invention. For example, although the detailed embodiments described herein react adipic acid and hexamethylenediamine to produce nylon 6,6, other monomers known to those skilled in this field could be used to produce other polyamides.

## Claims

1. A process for producing a polyamide from dicarboxylic acid monomer and diamine monomer, comprising:
mixing molten dicarboxylic acid monomer and molten diamine monomer in equimolar amounts, thereby producing a molten reaction mixture;
flowing the reaction mixture through at least one unvented reaction vessel, the residence time of the reaction mixture in the at least one unvented reaction vessel being between 0.01 minutes and 30 minutes, thereby forming a first product stream that comprises polyamide and water of polymerization: and
flowing the first product stream through at least one vented vessel, whereby water of polymerization is removed, thereby forming a second product stream that comprises polyamide.

2. The process of claim 1, wherein the first product stream further comprises unpolymerized dicarboxylic acid monomer and diamine monomer, and wherein further polymerization occurs in the at least one vented vessel.

3. The process of claim 1, wherein the molten dicarboxylic acid and the molten diamine are essentially dry.

4. The process of claim 1, wherein no additional dicarboxylic acid monomer or diamine monomer are added after the mixing of the molten dicarboxylic acid and the molten diamine.

5. The process of claim 1, wherein the temperature of the reaction mixture in the at least one unvented reaction vessel is between 220 and 300°C.

6. The process of claim 1, wherein the pressure in the at least one unvented reaction vessel is between 0-3.45 MPa (0-500 psig).

7. The process of claim 6, wherein the pressure in the at least one unvented reaction vessel is between 0.34-1.72 MPa (50-250 psig).

8. The process of claim 6, wherein the pressure in the at least one unvented reaction vessel is between 0.83-1.24 MPa (120-180 psig).

9. The process of claim 1, wherein the residence time of the first product stream in the at least one vented vessel is between 1 minute and 60 minutes.

10. The process of claim 1, wherein a portion of the second product stream is recycled in or to the at least one vented reaction vessel.

11. The process of claim 1, wherein the dicarboxylic acid monomer is adipic acid. the diamine monomer is hexamethylenediamine, and the polyamide is nylon 6,6.

12. The process of claim 1, wherein the molten dicarboxylic acid monomer is produced by:
removing oxygen from dry dicarboxylic acid by alternately subjecting essentially dry dicarboxylic acid in an oxygen removal pressure vessel to a vacuum and to inert gas pressure, thereby producing solid dicarboxylic acid that has reduced molecular oxygen content; and
feeding the solid dicarboxylic acid having reduced molecular oxygen content to a melter vessel which contains a quantity of molten dicarboxylic acid, whereby the solid dicarboxylic acid melts and a continuous stream of molten dicarboxylic acid is produced.

13. The process of claim 12, wherein the solid dicarboxylic acid is moved from the oxygen removal pressure vessel to the melter vessel by gravity.

14. The process of claim 12, wherein the solid dicarboxylic acid is moved from the oxygen removal pressure vessel to the melter vessel by a combination of gravity and inert gas pressure in the oxygen removal pressure vessel.

15. The process of claim 12, wherein the residence time of the dicarboxylic acid monomer in the melter vessel is less than three hours.

16. The process of claim 1, wherein the at least one unvented reaction vessel comprises a static inline mixer.

17. The process of claim 16, wherein the residence time of the reaction mixture in the static inline mixer is between 1-30 seconds.

18. The process of claim 1, wherein the first product stream exiting the at least one unvented reaction vessel contains less than 40% by weight unpolymerized monomers.

19. The process of claim 1, wherein the first product stream exiting the at least one unvented reaction vessel contains less than 10% by weight unpolymerized monomers.

20. The process of claim 1, wherein the at least one vented reaction vessel generates an offgas stream that comprises water vapor and vaporized diamine monomer, and wherein the offgas is contacted with molten dicarboxylic acid monomer in a recovery column, whereby at least a portion of the vaporized diamine monomer reacts with the dicarboxylic acid monomer to form polyamide, and wherein a liquid effluent stream is generated from the recovery column that comprises polyamide and unreacted molten dicarboxylic acid monomer, and wherein the liquid effluent stream is subsequently mixed with molten diamine monomer.

21. A process for producing a polyamide from dicarboxylic acid monomer and diamine monomer, comprising:
mixing molten dicarboxylic acid monomer and molten diamine monomer in equimolar amounts, thereby producing a molten reaction mixture; and
flowing the reaction mixture through at least one unvented reaction vessel at a pressure between 0-3.45 MPa (0-500 psig), the residence time of the reaction mixture in the at least one unvented reaction vessel being between 0.01 minutes and 30 minutes, thereby forming a first product stream that comprises polyamide.

22. The process of claim 21, wherein the molten dicarboxylic acid and the molten diamine are essentially dry.

23. The process of claim 21, wherein no additional dicarboxylic acid monomer or diamine monomer are added after the mixing of the molten dicarboxylic acid and the molten diamine.

24. The process of claim 21, wherein the temperature of the reaction mixture in the at least one unvented reaction vessel is between 220 and 300°C.

25. The process of claim 21, wherein the pressure in the at least one unvented reaction vessel is between 0.34-1.72 MPa (50-250 psig).

26. The process of claim 25, wherein the pressure in the at least one unvented reaction vessel is between 0.83-1.24 MPa (120-180 psig).

27. The process of claim 21, wherein the dicarboxylic acid monomer is adipic acid. the diamine monomer is hexamethylenediamine, and the polyamide is nylon 6.6.

28. The process of claim 21, wherein the molten dicarboxylic acid monomer is produced by:
removing oxygen from dry dicarboxylic acid by alternately subjecting essentially dry dicarboxylic acid in an oxygen removal pressure vessel to a vacuum and to inert gas pressure, thereby producing solid dicarboxylic acid that has reduced molecular oxygen content; and
feeding the solid dicarboxylic acid having reduced molecular oxygen content to a melter vessel which contains a quantity of molten dicarboxylic acid, whereby the solid dicarboxylic acid melts and a continuous stream of molten dicarboxylic acid is produced.

29. The process of claim 28, wherein the solid dicarboxylic acid is moved from the oxygen removal pressure vessel to the melter vessel by gravity.

30. The process of claim 28, wherein the solid dicarboxylic acid is moved from the oxygen removal pressure vessel to the melter vessel by a combination of gravity and inert gas pressure in the oxygen removal pressure vessel.

31. The process of claim 28, wherein the residence time of the dicarboxylic acid monomer in the melter vessel is less than three hours.

32. The process of claim 21, wherein the at least one unvented reaction vessel comprises a static inline mixer.

33. The process of claim 32, wherein the residence time of the reaction mixture in the static inline mixer is between 1-30 seconds.

34. A process for continuous melting of a dicarboxylic acid, comprising:
removing oxygen from dry dicarboxylic acid by alternately subjecting the dry dicarboxylic acid in an oxygen removal pressure vessel to a vacuum and to inert gas pressure, thereby producing solid dicarboxylic acid that has reduced molecular oxygen content; and
feeding the solid dicarboxylic acid having reduced molecular oxygen content to a melter vessel which contains a quantity of molten dicarboxylic acid, whereby the solid dicarboxylic acid melts and a continuous stream of molten dicarboxylic acid is produced.

35. A continuous process for making nylon 6.6 from adipic acid and hexamethylenediamine (HMD), comprising:
removing oxygen from dry adipic acid by alternately subjecting the dry acid in an oxygen removal pressure vessel to a vacuum and to inert gas pressure, thereby producing solid adipic acid that has reduced molecular oxygen content;
feeding the solid adipic acid having reduced molecular oxygen content to a melter vessel which contains a quantity of molten adipic acid, whereby the solid adipic acid melts and a continuous stream of molten adipic acid is produced;
melting HMD;
mixing molten adipic acid and molten HMD in equimolar amounts, thereby creating a reaction mixture;
flowing the reaction mixture through at least one unvented reaction vessel, the residence time of the reaction mixture in the at least one unvented reaction vessel being between 0.01 to 5 minutes, thereby forming a partially polymerized nylon 6,6 reaction mixture; and
flowing the partially polymerized reaction mixture through at least one vented reaction vessel, whereby the partially polymerized reaction mixture is further polymerized, producing nylon 6,6, and wherein water of polymerization is removed.

36. The process of claim 35, wherein the at least one vented reaction vessel generates an offgas stream that comprises water vapor and vaporized HMD, and wherein the offgas is contacted with molten adipic acid in a recovery column, whereby at least a portion of the vaporized HMD reacts with the adipic acid to form nylon 6,6, and wherein a liquid effluent stream is generated from the recovery column that comprises nylon 6.6 and unreacted molten adipic acid, and wherein the liquid effluent stream is subsequently mixed with molten HMD.

37. The process of claim 35, wherein the relative viscosity of the partially polymerized nylon 6.6 reaction mixture exiting the unvented reaction vessel is between 0 and 3, and the relative viscosity of the nylon 6.6 exiting the vented reaction vessel is between 3 and 15.

## Patentansprüche

1. Verfahren zur Herstellung eines Polyamids aus Dicarbonsäuremonomer und Diaminmonomer, umfassend:
das Vermischen von geschmolzenem Dicarbonsäuremonomer und geschmolzenem Diaminmonomer in äquimolaren Mengen um ein geschmolzenes Reaktionsgemisch herzustellen,
das Durchleiten des Reaktionsgemisches durch mindestens ein Reaktionsgefäß ohne Entlüftung, wobei die Verweilzeit des Reaktionsgemisches in dem mindestens einen Reaktionsgefäß ohne Entlüftung zwischen 0,01 Minuten und 30 Minuten liegt, wodurch ein erster Produktstrom gebildet wird, der Polyamid und Polymerisationswasser umfasst; und
Durchleiten des ersten Produktstroms durch mindestens ein Gefäß mit Entlüftung, wodurch Polymerisationswasser entfernt wird um einen zweiten Produktstrom zu bilden, der Polyamid umfasst.

2. Verfahren nach Anspruch 1, wobei der erste Produktstrom des Weiteren unpolymerisiertes Dicarbonsäuremonomer und Diaminmonomer umfasst und wobei in dem mindestens einen Gefäß mit Entlüftung weitere Polymerisation eintritt.

3. Verfahren nach Anspruch 1, wobei die geschmolzene Dicarbonsäure und das geschmolzene Diamin im Wesentlichen trocken sind.

4. Verfahren nach Anspruch 1, wobei nach dem Vermischen der geschmolzenen Dicarbonsäure und des geschmolzenen Diamins kein zusätzliches Dicarbonsäuremonomer oder Diaminmonomer zugegeben wird.

5. Verfahren nach Anspruch 1, wobei die Temperatur des Reaktionsgemisches in dem mindestens einen Reaktionsgefäß ohne Entlüftung zwischen 220 und 300°C liegt.

6. Verfahren nach Anspruch 1, wobei der Druck in dem mindestens einen Reaktionsgefäß ohne Entlüftung zwischen 0 und 3,45 MPa (0-500 psig) liegt.

7. Verfahren nach Anspruch 6, wobei der Druck in dem mindestens einen Reaktionsgefäß ohne Entlüftung zwischen 0,34 und 1,72 MPa (50-250 psig) liegt.

8. Verfahren nach Anspruch 6, wobei der Druck in dem mindestens einen Reaktionsgefäß ohne Entlüftung zwischen 0,83 und 1,24 MPa (120-180 psig) liegt.

9. Verfahren nach Anspruch 1, wobei die Verweilzeit des ersten Produktstroms in dem mindestens einen Gefäß mit Entlüftung zwischen 1 Minute und 60 Minuten beträgt.

10. Verfahren nach Anspruch 1, wobei ein Teil des zweiten Produktstroms in das oder zu dem mindestens einen Reaktionsgefäß mit Entlüftung zurückgeführt wird.

11. Verfahren nach Anspruch 1, wobei das Dicarbonsäuremonomer Adipinsäure ist, das Diaminmonomer Hexamethylendiamin ist und das Polyamid Nylon-6,6 ist.

12. Verfahren nach Anspruch 1, wobei das geschmolzene Dicarbonsäuremonomer hergestellt ist durch:
das Entfernen von Sauerstoff von trockener Dicarbonsäure durch abwechselndes Unterwerfen von im Wesentlichen trockener Dicarbonsäure in einem Sauerstoffentfernungs-Druckgefäß einem Vakuum und einem Inertgasdruck, wodurch feste Dicarbonsäure hergestellt wird, die einen verminderten Gehalt an molekularem Sauerstoff besitzt; und
das Zuführen der festen Dicarbonsäure mit vermindertem Gehalt an molekularem Sauerstoff zu einem Schmelzgefäß, das eine Menge von geschmolzener Dicarbonsäure enthält, wodurch die feste Dicarbonsäure schmilzt und ein kontinuierlicher Strom von geschmolzener Dicarbonsäure hergestellt wird.

13. Verfahren nach Anspruch 12, wobei die feste Dicarbonsäure durch Schwerkraft von dem Sauerstoffentfernungs-Druckgefäß zu dem Schmelzgefäß bewegt wird.

14. Verfahren nach Anspruch 12, wobei die feste Dicarbonsäure durch eine Kombination von Schwerkraft und Inertgasdruck in dem Sauerstoffentfernungs-Druckgefäß von dem Sauerstoffentfernungs-Druckgefäß zu dem Schmelzgefäß bewegt wird.

15. Verfahren nach Anspruch 12, wobei die Verweilzeit des Dicarbonsäuremonomers in dem Schmelzgefäß weniger als drei Stunden beträgt.

16. Verfahren nach Anspruch 1, wobei das mindestens eine Reaktionsgefäß ohne Entlüftung einen statischen Inline-Mischer umfasst.

17. Verfahren nach Anspruch 16, wobei die Verweilzeit des Reaktionsgemisches in dem statischen Inline-Mischer zwischen 1 und 30 Sekunden beträgt.

18. Verfahren nach Anspruch 1, wobei der erste Produktstrom, der das mindestens eine Reaktionsgefäß ohne Entlüftung verlässt, weniger als 40 Gew.-% unpolymerisierter Monomere enthält.

19. Verfahren nach Anspruch 1, wobei der erste Produktstrom, der das mindestens eine Reaktionsgefäß ohne Entlüftung verlässt, weniger als 10 Gew.-% unpolymerisierter Monomere enthält.

20. Verfahren nach Anspruch 1, wobei das mindestens eine Reaktionsgefäß mit Entlüftung einen Abgasstrom erzeugt, der Wasserdampf und verdampftes Diaminmonomer enthält und wobei der Abgasstrom in einer Rückgewinnungssäule mit geschmolzenem Dicarbonsäuremonomer in Kontakt gebracht wird, wodurch mindestens ein Teil des verdampften Diaminmonomers mit dem Dicarbonsäuremonomer reagiert um Polyamid zu bilden und wobei ein flüssiger Abflussstrom von der Rückgewinnungssäule generiert wird, der Polyamid und nichtumgesetztes geschmolzenes Dicarbonsäuremonomer umfasst und wobei der flüssige Abflussstrom anschließend mit geschmolzenem Diaminmonomer vermischt wird.

21. Verfahren zur Herstellung eines Polyamids aus Dicarbonsäuremonomer und Diaminmonomer, umfassend:
das Vermischen von geschmolzenem Dicarbonsäuremonomer und geschmolzenem Diaminmonomer in äquimolaren Mengen, wodurch ein geschmolzenes Reaktionsgemisch hergestellt wird; und
das Durchleiten des Reaktionsgemisches durch mindestens ein Reaktionsgefäß ohne Entlüftung bei einem Druck zwischen 0 und 3,45 MPa (0-500 psig), wobei die Verweilzeit des Reaktionsgemisches in dem mindestens einen Reaktionsgefäß ohne Entlüftung zwischen 0,01 Minuten und 30 Minuten beträgt, wodurch einer erster Produktstrom gebildet wird, der Polyamid umfasst.

22. Verfahren nach Anspruch 21, wobei die geschmolzene Dicarbonsäure und das geschmolzene Diamin im Wesentlichen trocken sind.

23. Verfahren nach Anspruch 21, wobei nach dem Vermischen der geschmolzenen Dicarbonsäure und des geschmolzenen Diamins kein zusätzliches Dicarbonsäuremonomer oder Diaminmonomer zugegeben wird.

24. Verfahren nach Anspruch 21, wobei die Temperatur des Reaktionsgemisches in dem mindestens einen Reaktionsgefäß ohne Entlüftung zwischen 220 und 300°C liegt.

25. Verfahren nach Anspruch 21, wobei der Druck in dem mindestens einen Reaktionsgefäß ohne Entlüftung zwischen 0,34 und 1,72 MPa (50-250 psig) liegt.

26. Verfahren nach Anspruch 25, wobei der Druck in dem mindestens einen Reaktionsgefäß ohne Entlüftung zwischen 0,83 und 1,24 MPa (120-180 psig) liegt.

27. Verfahren nach Anspruch 21, wobei das Dicarbonsäuremonomer Adipinsäure ist, das Diaminmonomer Hexamethylendiamin ist und das Polyamid Nylon-6,6 ist.

28. Verfahren nach Anspruch 21, wobei das geschmolzene Dicarbonsäuremonomer hergestellt wird durch:
das Entfernen von Sauerstoff von trockener Dicarbonsäure durch abwechselndes Unterwerfen von im Wesentlichen trockener Dicarbonsäure in einem Sauerstoffentfernungs-Druckgefäß einem Vakuum und einem Inertgasdruck, wodurch feste Dicarbonsäure hergestellt wird, die einen verminderten Gehalt an molekularem Sauerstoff besitzt; und
das Zuführen der festen Dicarbonsäure mit vermindertem Gehalt an molekularem Sauerstoff zu einem Schmelzgefäß, das eine Menge von geschmolzener Dicarbonsäure enthält, wodurch die feste Dicarbonsäure schmilzt und ein kontinuierlicher Strom von geschmolzener Dicarbonsäure hergestellt wird.

29. Verfahren nach Anspruch 28, wobei die feste Dicarbonsäure durch Schwerkraft von dem Sauerstoffentfernungs-Druckgefäß zu dem Schemzgefäß bewegt wird.

30. Verfahren nach Anspruch 28, wobei die feste Dicarbonsäure durch eine Kombination von Schwerkraft und Inertgasdruck in dem Sauerstoffentfernungs-Druckgefäß von dem Sauerstoffentfernungs-Druckgefäß zu dem Schmelzgefäß bewegt wird.

31. Verfahren nach Anspruch 28, wobei die Verweilzeit des Dicarbonsäuremonomers in dem Schmelzgefäß weniger als drei Stunden beträgt.

32. Verfahren nach Anspruch 21, wobei das mindestens eine Reaktionsgefäß ohne Entlüftung einen statischen Inline-Mischer umfasst.

33. Verfahren nach Anspruch 32, wobei die Verweilzeit des Reaktionsgemisches in dem statischen Inline-Mischer zwischen 1 und 30 Sekunden beträgt.

34. Verfahren zum kontinuierlichen Schmelzen von Dicarbonsäure, umfassend:
das Entfernen von Sauerstoff von trockener Dicarbonsäure durch abwechselndes Unterwerfen der trockenen Dicarbonsäure in einem Sauerstoffentfernungs-Druckgefäß einem Vakuum und einem Inertgasdruck, wodurch feste Dicarbonsäure hergestellt wird, die einen verminderten Gehalt an molekularem Sauerstoff besitzt; und
das Zuführen der festen Dicarbonsäure mit vermindertem Gehalt an molekularem Sauerstoff zu einem Schmelzgefäß, das eine Menge von geschmolzener Diarbonsäure enthält, wodurch die feste Dicarbonsäure schmilzt und ein kontinuierlicher Strom von geschmolzener Dicarbonsäure hergestellt wird.

35. Kontinuierliches Verfahren zur Herstellung von Nylon-6,6 aus Adipinsäure und Hexamethylendiamin (HMD), umfassend:
das Entfernen von Sauerstoff von trockener Apidinsäure durch abwechselndes Unterwerfen der trockenen Säure in einem Sauerstoffentfernungs-Druckgefäß einem Vakuum und einem Inertgasdruck, wodurch feste Adipinsäure hergestellt wird, die einen verminderten Gehalt an molekularem Sauerstoff besitzt;
das Zuführen der festen Adipinsäure mit vermindertem Gehalt an molekularem Sauerstoff zu einem Schmelzgefäß, das eine Menge von geschmolzener Adipinsäure enthält, wodurch die feste Adipinsäure schmilzt und ein kontinuierlicher Strom von geschmolzener Adipinsäure hergestellt wird;
das Schmelzen von HMD;
das Vermischen der geschmolzenen Adipinsäure und des geschmolzenen HMD in äquimolaren Mengen, wodurch ein Reaktionsgemisch erzeugt wird;
das Durchleiten des Reaktionsgemisches durch mindestens ein Reaktionsgefäß ohne Entlüftung, wobei die Verweilzeit des Reaktionsgemisches in dem mindestens einen Reaktionsgefäß ohne Entlüftung zwischen 0,01 und 5 Minuten beträgt, wodurch ein teilweise polymerisiertes Nylon-6,6-Reaktionsgemisch gebildet wird; und
das Durchleiten des teilweise polymerisierten Reaktionsgemisches durch mindestens ein Reaktionsgefäß mit Entlüftung, wodurch das teilweise polymerisierte Reaktionsgemisch weiter polymerisiert wird, wobei Nylon-6,6 hergestellt wird und wobei Polymerisationswasser entfernt wird.

36. Verfahren nach Anspruch 35, wobei das mindestens eine Reaktionsgefäß mit Entlüftung einen Abgasstrom erzeugt, der Wasserdampf und verdampftes HMD enthält und wobei der Abgasstrom in einer Rückgewinnungssäule mit geschmolzener Adipinsäure in Kontakt gebracht wird, wodurch mindestens ein Teil des verdampften HMD mit der Adipinsäure umgesetzt wird um Nylon-6,6 zu bilden und wobei ein flüssiger Abflussstrom von der Rückgewinnungssäule erzeugt wird, der Nylon-6,6 und nicht-umgesetzte geschmolzene Adipinsäure umfasst, und wobei der flüssige Abflussstrom anschließend mit geschmolzenem HMD vermischt wird.

37. Verfahren nach Anspruch 35, wobei die relative Viskosität des teilweise polymerisierten Nylon-6,6-Reaktionsgemisches, das das Reaktionsgefäß ohne Entlüftung verlässt, zwischen 0 und 3 beträgt und die relative Viskosität des Nylon-6,6, das das Reaktionsgefäß mit Entlüftung verlässt, zwischen 3 und 15 beträgt.

## Revendications

1. Procédé de préparation d'un polyamide à partir d'un monomère acide dicarboxylique et d'un monomère diamine, comprenant les étapes consistant à :
mélanger du monomère acide dicarboxylique fondu et du monomère diamine fondu en quantités équimolaires, pour préparer ainsi un mélange réactionnel fondu ;
faire circuler le mélange réactionnel à travers au moins un récipient réactionnel non ventilé, le temps de séjour du mélange réactionnel dans le au moins un récipient réactionnel non ventilé étant entre 0,01 minute et 30 minutes, pour former ainsi un premier courant de produit qui comprend du polyamide et de l'eau de polymérisation ; et
faire circuler le premier courant de produit à travers au moins un récipient ventilé, dans lequel l'eau de polymérisation est éliminée, pour former ainsi un deuxième courant de produit qui comprend du polyamide.

2. Procédé selon la revendication 1, dans lequel le premier courant de produit comprend en outre du monomère acide dicarboxylique et du monomère diamine non polymérisés, et dans lequel une polymérisation plus poussée a lieu dans le au moins un récipient ventilé.

3. Procédé selon la revendication 1, dans lequel l'acide dicarboxylique fondu et la diamine fondue sont sensiblement secs.

4. Procédé selon la revendication 1, dans lequel on n'ajoute pas de monomère acide dicarboxylique ou de monomère diamine additionnels après le mélange de l'acide dicarboxylique fondu et de la diamine fondue.

5. Procédé selon la revendication 1, dans lequel la température du mélange réactionnel dans le au moins un récipient réactionnel non ventilé est entre 220 et 300 °C.

6. Procédé selon la revendication 1, dans lequel la pression manométrique dans le au moins un récipient réactionnel non ventilé est comprise entre 0 et 3,45 MPa (0 - 500 psig).

7. Procédé selon la revendication 6, dans lequel la pression manométrique dans le au moins un récipient réactionnel non ventilé est comprise entre 0,34 et 1,72 MPa (50 - 250 psig).

8. Procédé selon la revendication 6, dans lequel la pression manométrique dans le au moins un récipient réactionnel non ventilé est comprise entre 0,83 et 1,24 MPa (120 - 180 psig).

9. Procédé selon la revendication 1, dans lequel le temps de séjour du premier courant de produit dans le au moins un récipient ventilé est entre 1 minute et 60 minutes.

10. Procédé selon la revendication 1, dans lequel une partie du deuxième courant de produit est recyclée dans ou vers le au moins un récipient réactionnel ventilé.

11. Procédé selon la revendication 1, dans lequel le monomère acide dicarboxylique est l'acide adipique, le monomère diamine est l'hexaméthylènediamine, et le polyamide est le nylon 6,6.

12. Procédé selon la revendication 1, dans lequel le monomère acide dicarboxylique fondu est produit
en éliminant l'oxygène de l'acide dicarboxylique sec en soumettant l'acide dicarboxylique sensiblement sec, dans un récipient supportant la pression d'élimination d'oxygène, alternativement au vide et à une pression de gaz inerte, pour produire ainsi un acide dicarboxylique solide qui a une teneur réduite en oxygène moléculaire ; et
en alimentant l'acide dicarboxylique solide ayant une teneur réduite en oxygène moléculaire à un récipient pour fusion qui contient une quantité d'acide dicarboxylique fondu, pour fondre ainsi l'acide dicarboxylique solide et pour produire un courant continu d'acide dicarboxylique fondu.

13. Procédé selon la revendication 12, dans lequel l'acide dicarboxylique solide est déplacé par gravité depuis le récipient supportant la pression d'élimination d'oxygène dans le récipient pour fusion.

14. Procédé selon la revendication 12, dans lequel l'acide dicarboxylique solide est déplacé depuis le récipient supportant la pression d'élimination d'oxygène dans le récipient pour fusion par combinaison de la gravité et de la pression d'un gaz inerte dans le récipient supportant la pression d'élimination d'oxygène.

15. Procédé selon la revendication 12, dans lequel le temps de séjour du monomère acide dicarboxylique dans le récipient pour fusion est inférieur à trois heures.

16. Procédé selon la revendication 1, dans lequel le au moins un récipient réactionnel non ventilé comprend un mélangeur statique en ligne.

17. Procédé selon la revendication 16, dans lequel le temps de séjour du mélange réactionnel dans le mélangeur statique en ligne est entre 1 et 30 secondes.

18. Procédé selon la revendication 1, dans lequel le premier courant de produit sortant du au moins un récipient réactionnel non ventilé contient moins de 40 % en poids de monomères non polymérisés.

19. Procédé selon la revendication 1, dans lequel le premier courant de produit sortant du au moins un récipient réactionnel non ventilé contient moins de 10 % en poids de monomères non polymérisés.

20. Procédé selon la revendication 1, dans lequel le au moins un récipient réactionnel ventilé génère un courant d'effluent gazeux qui comprend de la vapeur d'eau et du monomère diamine vaporisé, et dans lequel l'effluent gazeux est mis en contact avec du monomère acide dicarboxylique fondu dans une colonne de récupération, au moins une partie du monomère diamine vaporisé réagissant ainsi avec le monomère acide dicarboxylique pour former du polyamide, et dans lequel un courant d'effluent liquide est généré depuis la colonne de récupération, qui comprend du polyamide et du monomère acide dicarboxylique fondu n'ayant pas réagi, et dans lequel le courant d'effluent liquide est mélangé postérieurement avec du monomère diamine fondu.

21. Procédé de préparation d'un polyamide à partir d'un monomère acide dicarboxylique et d'un monomère diamine, comprenant les étapes consistant à :
mélanger du monomère acide dicarboxylique fondu et du monomère diamine fondu en quantités équimolaires, pour préparer ainsi un mélange réactionnel fondu ; et
faire circuler le mélange réactionnel à travers au moins un récipient réactionnel non ventilé à une pression manométrique comprise entre 0 et 3,45 MPa (0 - 500 psig), le temps de séjour du mélange réactionnel dans le au moins un récipient réactionnel non ventilé étant entre 0,01 minute et 30 minutes, pour former ainsi un premier courant de produit qui comprend du polyamide.

22. Procédé selon la revendication 21, dans lequel l'acide dicarboxylique fondu et la diamine fondue sont sensiblement secs.

23. Procédé selon la revendication 21, dans lequel on n'ajoute pas de monomère acide dicarboxylique ou de monomère diamine additionnels après le mélange de l'acide dicarboxylique fondu et de la diamine fondue.

24. Procédé selon la revendication 21, dans lequel la température du mélange réactionnel dans le au moins un récipient réactionnel non ventilé est entre 220 et 300 °C.

25. Procédé selon la revendication 21, dans lequel la pression manométrique dans le au moins un récipient réactionnel non ventilé est comprise entre 0,34 et 1,72 MPa (50 - 250 psig).

26. Procédé selon la revendication 25, dans lequel la pression manométrique dans le au moins un récipient réactionnel non ventilé est comprise entre 0,83 et 1,24 MPa (120 - 180 psig).

27. Procédé selon la revendication 21, dans lequel le monomère acide dicarboxylique est l'acide adipique, le monomère diamine est l'hexaméthylènediamine et le polyamide est le nylon 6,6.

28. Procédé selon la revendication 21, dans lequel le monomère acide dicarboxylique fondu est produit :
en éliminant l'oxygène de l'acide dicarboxylique sec en soumettant l'acide dicarboxylique sensiblement sec, dans un récipient supportant la pression d'élimination d'oxygène, alternativement au vide et à une pression de gaz inerte, pour produire ainsi un acide dicarboxylique solide qui a une teneur réduite en oxygène moléculaire ; et
en alimentant l'acide dicarboxylique solide ayant une teneur réduite en oxygène moléculaire à un récipient pour fusion qui contient une quantité d'acide dicarboxylique fondu, pour fondre ainsi l'acide dicarboxylique solide et pour produire un courant continu d'acide dicarboxylique fondu.

29. Procédé selon la revendication 28, dans lequel l'acide dicarboxylique solide est déplacé par gravité depuis le récipient supportant pression d'élimination d'oxygène dans le récipient pour fusion.

30. Procédé selon la revendication 28, dans lequel l'acide dicarboxylique solide est déplacé depuis le récipient supportant la pression d'élimination d'oxygène dans le récipient pour fusion par combinaison de la gravité et de la pression de gaz inerte dans le récipient supportant la pression d'élimination d'oxygène.

31. Procédé selon la revendication 28, dans lequel le temps de séjour du monomère acide dicarboxylique dans le récipient pour fusion est inférieur à trois heures.

32. Procédé selon la revendication 21, dans lequel le au moins un récipient réactionnel non ventilé comprend un mélangeur statique en ligne.

33. Procédé selon la revendication 32, dans lequel le temps de séjour du mélange réactionnel dans le mélangeur statique en ligne est entre 1 et 30 secondes.

34. Procédé pour fondre en continu un acide dicarboxylique, comprenant les étapes consistant à :
éliminer l'oxygène de l'acide dicarboxylique sec en soumettant l'acide dicarboxylique sec, dans un récipient supportant la pression pour élimination d'oxygène, alternativement au vide et à une pression de gaz inerte, pour produire ainsi un acide dicarboxylique solide qui a une teneur réduite en oxygène moléculaire ; et
alimenter l'acide dicarboxylique solide ayant une quantité réduite en oxygène moléculaire à un récipient pour fusion qui contient une quantité d'acide dicarboxylique fondu, pour fondre ainsi l'acide dicarboxylique solide et pour produire un courant continu d'acide dicarboxylique fondu.

35. Procédé pour préparer en continu le nylon 6,6 à partir de l'acide adipique et de l'hexaméthylènediamine (HMD), comprenant les étapes consistant à :
éliminer l'oxygène de l'acide adipique sec en soumettant l'acide sec, dans un récipient supportant la pression pour élimination d'oxygène, alternativement au vide et à une pression de gaz inerte, pour produire ainsi de l'acide adipique solide qui a une teneur réduite en oxygène moléculaire ;
alimenter l'acide adipique solide ayant une teneur réduite en oxygène moléculaire à un récipient pour fusion qui contient une quantité d'acide adipique fondu, pour fondre ainsi l'acide adipique solide et pour produire un courant continu d'acide adipique fondu;
faire fondre la HMD ;
mélanger l'acide adipique fondu et la HMD fondue en quantités équimolaires, pour créer ainsi un mélange réactionnel ;
faire circuler le mélange réactionnel à travers au moins un récipient réactionnel non ventilé, le temps de séjour du mélange réactionnel dans le au moins un récipient réactionnel non ventilé étant entre 0,01 et 5 minutes, pour former ainsi un mélange réactionnel de nylon 6,6 partiellement polymérisé ; et
faire circuler le mélange réactionnel partiellement polymérisé à travers au moins un récipient réactionnel ventilé, le mélange partiellement polymérisé étant encore polymérisé, pour produire du nylon 6,6, l'eau de polymérisation étant éliminée.

36. Procédé selon la revendication 35, dans lequel le au moins un récipient réactionnel ventilé génère un courant d'effluent gazeux qui comprend de la vapeur d'eau et de la HMD vaporisée, et dans lequel l'effluent gazeux est mis en contact avec de l'acide adipique fondu dans une colonne de récupération, au moins une partie de la HMD vaporisée réagissant avec l'acide adipique pour former du nylon 6,6, et dans lequel un courant d'effluent liquide est généré depuis la colonne de récupération, qui comprend du nylon 6,6 et de l'acide adipique fondu n'ayant pas réagi, et dans lequel le courant d'effluent liquide est postérieurement mélangé avec de la HMD fondue.

37. Procédé selon la revendication 35, dans lequel la viscosité relative du mélange réactionnel de nylon 6,6 partiellement polymérisé sortant du récipient réactionnel non ventilé est entre 0 et 3, et la viscosité relative du nylon 6,6 sortant du récipient réactionnel ventilé est entre 3 et 15.
